# EUROPÄISCHE PATENTSCHRIFT

(11) **EP 1 410 577 B1**
(45) Veröffentlichungstag und Bekanntmachung des Hinweises auf die Patenterteilung: **17.01.2007**
(21) Anmeldenummer: 02754351.1
(22) Anmeldetag: 11.07.2002
(51) Int. Cl.: H04L 12/437, H04B 10/00, B60R 16/02, H04L 29/14

(54) **NETZWERKKOMPONENTE FÜR EIN OPTISCHES NETZWERK MIT NOTLAUFFUNKTION, INSBESONDERE FÜR EIN OPTISCHES NETZWERK IN RINGTOPOLOGIE**
NETWORK COMPONENT FOR AN OPTICAL NETWORK COMPRISING AN EMERGENCY OPERATION FUNCTION, ESPECIALLY FOR AN OPTICAL NETWORK IN RING TOPOLOGY
ELEMENTS RESEAU DESTINES A UN RESEAU OPTIQUE AYANT UNE FONCTION DE SECURITE, EN PARTICULIER A UN RESEAU OPTIQUE A TOPOLOGIE ANNULAIRE

(30) Priorität: 11.07.2001 DE 10133749
(43) Veröffentlichungstag der Anmeldung: 21.04.2004
(73) Patentinhaber: ROBERT BOSCH GMBH, 70442 Stuttgart (DE)
(72) Erfinder: MEROTH, Ansgar, 71229 Leonberg (DE); MEYER, Dietmar, 30890 Barsinghausen (DE); PETRY, Franz-Joseph, 71134 Aidlingen (DE)
(86) Internationale Anmeldenummer: PCT/DE2002/002544
(87) Internationale Veröffentlichungsnummer: WO 2003/007554

(56) Entgegenhaltungen:
- DE-A- 19 722 189
- US-A- 5 299 312
- US-A- 6 009 491

## Beschreibung

### STAND DER TECHNIK

Die vorliegende Erfindung betrifft eine Netzwerkkomponente für ein optisches Netzwerk mit Notlauffunktion, insbesondere für ein optisches Netzwerk in Ringtopologie.

Multimedia-Systeme in modernen Kraftfahrzeugen sind als vernetzte Systeme aufgebaut, die in einer Ringtopologie optische oder elektrische Bussysteme einsetzen. In einer solchen Ringtopologie können Schlüsselkomponenten (z.B. eine Bedieneinheit) vernetzt sein, deren innerer Aufbau aus einer Vielzahl von Einzelkomponenten (z.B. Man-Machine-Interface-Prozessor, Tuner, Gate-Way etc) besteht. Die Anordnung dieser Komponenten in einem Gehäuse erfordert aus Gründen der Buskonformität einen Nachrichten- und Datenaustausch über den externen Bus, d.h. ein interner Datenaustausch zwischen einzelnen, voneinander unabhängigen Komponenten, ist nicht zulässig. Nach außen verhalten sich die in einem Gerät zusammengefassten Komponenten wie getrennte logische Geräte.

Ist in einer solchen Konstellation ein internes Gate-Way z.B. über den CAN-BUS mit dem Innenraum-CAN des Fahrzeugs verbunden, so ist bei Ausfall des externen optischen Rings die Weitergabe von CAN-Nachrichten zu Komponenten innerhalb des Gerätes und die Kommunikation zwischen den Komponenten nicht mehr gegeben. Im Fall eines Ringbruchs kommt es somit zu einem Totalausfall des Systems.

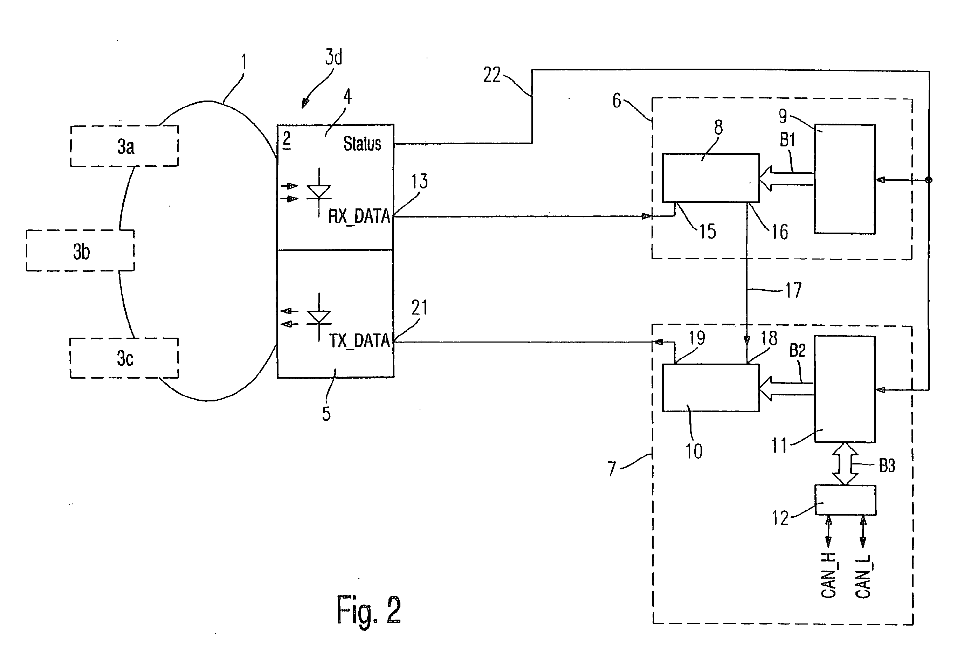

Fig. 2 zeigt den Aufbau eines bekannten Multimedia-Systems für Kraftfahrzeuge mit einem optischen Bus-System 1 in Form einer Ringtopologie. Als in Kraftfahrzeugen übliche BusSysteme können hier D2B, MOST oder ähnliche Systeme zum Einsatz kommen. In diesen optischen Ring sind weitere Komponenten 3a-d eingebunden.

Die optische Ankopplung einer bestimmten, hier näher erläuterten Komponente 3d an das optische Bus-System 1 erfolgt über ein Steckersystem 2, das wiederum aus einem Empfängermodul 4 und einem Sendemodul 5 aufgebaut ist. Das Empfängermodul 4 empfängt optische Signale aus dem optischen Bus-System 1 und wandelt diese in elektrische Signale um. Elektrische Signale werden im Sendemodul 5 in optische Signale umgewandelt und in den Ring 1 eingespeist.

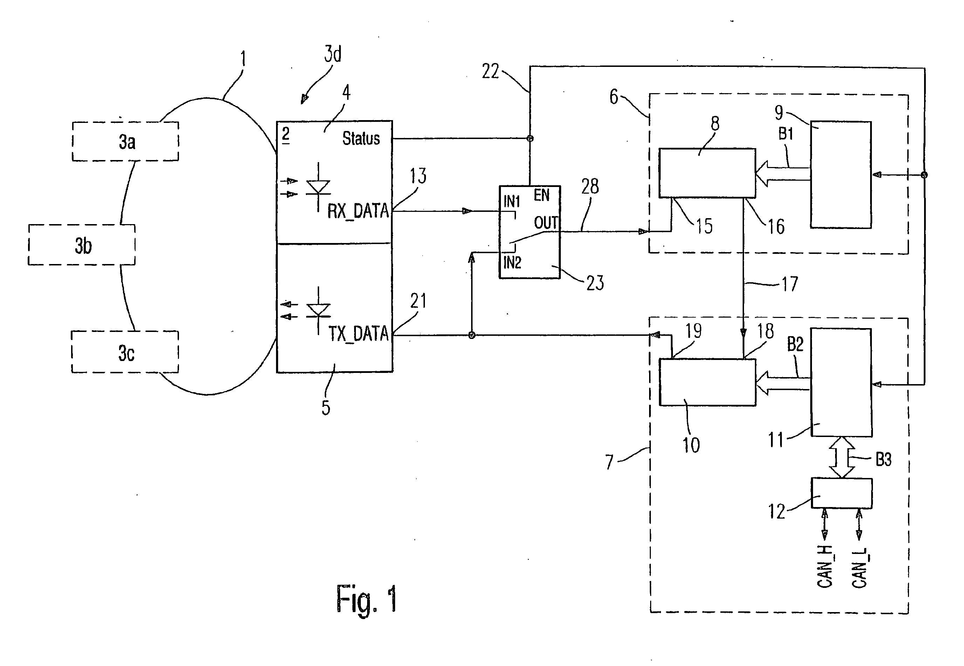

Im weiteren ist in Figur 1 schematisch der interne Aufbau der vernetzten Komponente 3d mit voneinander unabhängigen Einzelkomponenten 6 und 7 dargestellt. Die Komponente 6 besteht aus einem Transceiver 8 und einem Prozessor 9. Die Komponente 7 besitzt, neben dem Transceiver 10 und dem Prozessor 11, noch eine weitere, hier als CAN-Bus-Interface 12 ausgeführte Schnittstelle zum Daten- und Befehlsaustausch mit anderen üblichen Bussysteme im Kfz über die Leitungen CAN_H und CAN_L, welche über den Bus B3 an den Prozessor 11 angeschlossen ist. Leitung 22 ist an einen Ausgang STATUS des Steckersystems 2 angeschlossen und meldet Aktivität (Licht) auf dem optischen Ring 1 an den Prozessor 9 bzw. 11 der internen Komponenten 6 bzw. 7.

Optische Signale aus dem Ring 1 stehen als elektrische Signale am Ausgang RX_DATA des Empfängermoduls 4 auf der Leitung 13 zur Verfügung und werden an den Eingang 15 von Transceiver 8 der Komponente 6 weitergereicht.

Über den Transceiver 8 kann der Prozessor 9 über den Bus B1 Daten und Befehle aus dem Ring holen und über den Ausgang 16 des Transceivers 8 und die Leitung 17 in den Eingang 18 vom Transceiver 10 einspeisen. Über den Transceiver 10 erfolgt Über den Bus B2 der Datenaustausch vom Prozessor 11, der seine Daten über den Ausgang 19 vom Transceiver 10 und die Leitung 21 in den Eingang TX_DATA des Sendemoduls einspeist. Nach elektrisch/ optischer Wandlung im Sendemodul 5 stehen die Daten und Befehle auf dem optischen Ring 1 zur Verfügung.

Wie aus Figur 2 ersichtlich, besteht nach optisch/ elektrischer Wandlung durch das Empfängermodul 4 und elektrisch-/optischer Wandlung durch das Sendemodul 5 innerhalb der Komponente 3d ein elektrischer Ring bestehend aus Leitung 13, Transceiver 8, Leitung 17, transceiver 10, Leitung 21 und Steckersystem 2. .

Empfängt der Prozessor 11 über die CAN-Schnittstelle 12 Daten, die für Prozessor 9 bestimmt sind, oder soll ein Datenaustausch zwischen den Prozessoren 9 und 11 erfolgen, so kann dies nur über den optischen Ring 1, Leitung 13, Transceiver 8, Leitung 17, Transceiver 10 und Leitung 21 erfolgen. Die Koppelstelle zwischen dem optischen Bus-System und dem elektrischen Ring bildet das Steckersystem 2. Bei Bruch des optischen Bus-Systems 1 oder bei fehlerhaftem Kontakt am Steckersystem 2 ist ein Datenaustausch zwischen den Komponenten innerhalb des Gerätes nicht mehr gegeben. Dies hat einen Totalausfall des Gerätes zur Folge, auch wenn innerhalb des Gerätes oder über andere Kfz-Spezifische Schnittstellen (z.B. CAN-Schnittstelle 12) ein Betrieb des Gerätes auch ohne weitere Teilnehmer aus dem optischen Bus 1 möglich wäre

Aus der US 5,299,312 ist ein Netzwerk bekannt, das sich aus einzelnen Unternetzwerken zusammensetzt, die miteinander verbunden sind. In einem ersten Zustand wird die Kommunikation des Hauptnetzwerkes durch die einzelnen Unternetzwerke hindurchgeleitet. Tritt in einem der Unternetzwerke ein Fehler auf, kann das Unternetzwerk aus dem Gesamtnetzwerk herausgeschaltet werden.

Die der vorliegenden Erfindung zugrundeliegende Problematik besteht allgemein darin, eine Netzwerkkomponente für ein optisches Netzwerk mit Notlauffunktion, insbesondere für ein optisches Netzwerk in Ringtopologie, zu konzipieren, die bei Bruch des optischen oder elektrischen Rings minimale Notlaufeigenschaften (z.B. Bedienbarkeit durch den Fahrer, Fehleranzeige, akustische Warnungen, Aufrechterhaltung minimaler (Radio-) Funktionen) innerhalb der Komponente gewährleistet.

### VORTEILE DER ERFINDUNG

Die erfindungsgemäße Netzwerkkomponente für ein optisches Netzwerk mit Notlauffunktion, insbesondere für ein optisches Netzwerk in Ringtopologie, mit den Merkmalen des Anspruchs 1 weist folgende Vorteile auf:
- für obige Notlaufeigenschaft sind keine weiteren interne Geräteschnittstelle erforderlich;
- es wird kein zusätzlicher Nachrichtenkatalog benötigt;
- durch die elektrische Vernetzung der Komponenten innerhalb der Netzwerkkomponente kann im Stör- und Normalbetrieb die identische Software im vollen Leistungsumfang genutzt werden;
- innerhalb der Netzwerkkomponente ist dieses Konzept beliebig erweiterbar. An der Verbindung zwischen den ersten und zweiten Datenverarbeitungsvorrichtung kann eine beliebige Anzahl weiterer Komponenten eingebunden werden.

Die der vorliegenden Erfindung zugrundeliegende Idee besteht darin, eine Notlaufeigenschaft diverser Schlüsselkomponenten innerhalb einer Netzwerkkomponente dadurch aufrechtzuerhalten, dass diese Schlüsselkomponenten in einem minimalen Ringsystem miteinander verschaltet sind. Die volle Funktionalität der Netzwerkkomponente kann dann genutzt werden, vermindert um die Funktionen, die durch andere Busteilnehmer am optischen Ring zur Verfügung gestellt werden.

In den Unteransprüchen finden sich vorteilhafte Weiterbildungen und Verbesserungen der in Anspruch 1 angegebenen Notlaufschaltung für ein optisches Netz in Ringtopologie.

Gemäß einer bevorzugten Weiterbildung umfaßt die Ankoppelungseinrichtung ein optisches Steckersystem.

Gemäß einer weiteren bevorzugten Weiterbildung weist das Empfangsmodul die Erfassungseinrichtung zum Erfassen des Netzwerkstatus auf und gibt ein logisches elektrisches Signal von mindestens einem Bit entsprechend dem jeweiligen Netzwerkstatus aktiv/nicht-aktiv aus.

Gemäß einer weiteren bevorzugten Weiterbildung sind die erste Datenverarbeitungseinrichtung und/oder die zweite Datenverarbeitungseinrichtung mit der Erfassungseinrichtung verbunden.

Gemäß einer weiteren bevorzugten Weiterbildung weisen die erste Datenverarbeitungseinrichtung und/oder die zweite Datenverarbeitungseinrichtung einen Transceiver und einen damit jeweils verbundenen Prozessor auf.

Gemäß einer weiteren bevorzugten Weiterbildung empfängt die Umschalteinrichtung das logische elektrische Signal als Steuersignal und verbindet bei aktiven Netzwerkstatus den Eingangs der ersten Datenverarbeitungseinrichtung mit dem Empfangsmodul und verbindet bei nicht-aktivem Netzwerkstatus den Eingang der ersten Datenverarbeitungseinrichtung mit dem Ausgang der zweiten Datenverarbeitungseinrichtung.

Gemäß einer weiteren bevorzugten Weiterbildung ist die erste und/oder zweite Datenverarbeitungsvorrichtung über eine Schnittstelle mit einem drahtgebundenen Netzwerk verbunden.

Gemäß einer weiteren bevorzugten Weiterbildung geben die erste Datenverarbeitungseinrichtung und/oder die zweite Datenverarbeitungseinrichtung ein fehlendes logisches elektrisches Signal zum Anzeigen eines aktiven Netzwerkzustandes nach dem Senden einer eigenen Nachricht auf einem Display oder über die Schnittstelle als Fehlermeldung aus.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: den Aufbau eines Multimedia-Systems für Kraftfahrzeuge mit Notlaufeigenschaft gemäß einer Ausführungsform der Erfindung; und
- Fig. 2: den Aufbau eines bekannten Multimedia-Systems für Kraftfahrzeuge.

### BESCHREIBUNG DER AUSFÜHRUNGSBEISPIELE

Fig. 1 zeigt den Aufbau eines Multimedia-Systems für Kraftfahrzeuge mit Notlaufeigenschaft gemäß einer Ausführungsform der Erfindung. In Fig. 1 bezeichnen gleiche Bezugszeichen wie in Fig. 1 gleiche bzw. funktionsgleiche Komponenten.

Gemäß Fig. 1 erfolgt bei dieser Ausführungsform ein Einfügen eines Umschalters 23 zur Gewährleistung von Notlaufeigenschaften. Der Umschalter 23 ist mit seinem Eingang IN1 und der Leitung 13 mit dem Ausgang RX_DATA des Steckersystems 3 verbunden. Der zweite Eingang IN2 des Umschalters 23 liegt an der Leitung 21 und ist so mit dem Ausgang TX_DATA des Steckersystems 3 verbunden. Über die Leitung 28 ist der Ausgang OUT des Umschalters 23 mit dem Eingang 15 des Transceivers 8 verbunden. Der Eingang EN' des Umschalters 23 ist mit der Leitung 22 verbunden.

Der Umschalter 23 ist so aufgebaut, dass sein Ausgang OUT in Abhängigkeit von der Signalspannung am Eingang EN' wahlweise mit einem der Eingänge IN1 oder IN2 verbunden ist. In Fig. 1 ist das Potential an EN' so gewählt, dass der Eingang IN1 bei 0-Potential mit dem Ausgang OUT verbunden ist, d.h. bei 1-Potential ist der Eingang IN2 mit dem Ausgang OUT verbunden.

Entsprechend der Anwendung kann das Potential an EN' durch Auswahl eines entsprechenden Schalters oder geeignete Schaltungsmaßnahmen umgekehrt werden.

Im Ruhezustand der in Fig. 1 dargestellten Gerätekonfiguration ist kein Licht auf dem optischen Ring 1 und über die Leitung 22 liegt 1-Potential an EN' des Umschalters 23. Der Eingang IN2 ist mit dem Ausgang OUT verbunden. Ein vom Prozessor 9 über den Bus B1 gesendetes Signal gelangt über den Ausgang 16 des Transceivers 8 und die Leitung 17 zum Eingang 18 des Transceivers 10. Von hier wird das Signal über den Ausgang 19 des Transceivers 10 und die Leitung 21 an den Eingang TX-DATA des Steckersystems 3 weiter geleitet. Nach elektrisch/optischer Wandlung im Sendemodul 5 liegt das vom Prozessor 9 gesendete Signal auf dem optischen Ring 1, der damit in den aktiven Zustand übergeht.

Busaktivität wird durch 0-Potential auf der Leitung 22 an die Prozessoren 9 und 11 signalisiert und liegt am Eingang EN' des Umschalters 23, der durch den Potentialwechsel an EN' den Eingang IN1 mit dem Ausgang OUT verbindet. Nach optisch/elektrischer Wandlung im Empfängermodul 4 gelangen die Signale vom optischen Ring 1 über den Ausgang RX_DATA des Empfängermoduls 4 und die Leitung 13 zum Eingang IN1 des Umschalters 23, dessen Ausgang OUT über Leitung 28 mit Eingang 15 des Transceivers 8 verbunden ist.

Der Busaufbau ist abgeschlossen: Externe Komponenten 3a-c und geräteinterne Komponenten 6 und 7 können Daten untereinander austauschen.

Bei Bruch des optischen Ringes 1 oder fehlerhafter Steckung am Steckersystem 2 kommt es zu einem Totalausfall des gesamten Bussystems. Dies wird innerhalb des Gerätes bei der vorliegenden Ausführungsform dadurch umgangen, dass in einem derartigen Fehlerfall die Leitung 22 durch den fehlenden Status "Bus aktiv" weiterhin 1-Potential führt. Der Umschalter 23 verbindet hierdurch weiterhin den Eingang IN2 mit Ausgang OUT und schließt über Leitung 28, Transceiver 8, Leitung 17, Transceiver 10 und Leitung 21 innerhalb des Gerätes einen elektrischen Ring. Die Kommunikation unter den Komponenten innerhalb des Gerätes bleibt somit bestehen, und über eine Kfz-übliche Schnittstelle, wie z.B. die CAN-Schnittstelle 12, kann die Kommunikation mit an diesem Bussystem angeschlossenen Geräten erfolgen.

Über die fehlende Statusmeldung der Leitung 22 nach dem Senden einer eigenen Nachricht können die Prozessoren 9 und 11 diesen Fehler z.B. auf einem Display oder über CAN-Schnittstelle 12 anzeigen bzw. ausgeben.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Erfassung des Netzwerkstatus gemäß der obigen Ausführungsform nur beispielhaft und könnte z.B. auch von einem der Prozessoren durchgeführt werden.

## Patentansprüche

1. Netzwerkkomponente (3d) für ein optisches Netzwerk (1)
mit einer Ankopplungseinrichtung (2; 4, 5) zum optischen Ankoppeln der Netzwerkkomponente (3d) an das optische Netzwerk (1), wobei die Ankopplungseinrichtung (2; 4, 5) ein Empfangsmodul (4) zum Umwandeln optischer Netzwerkdaten in elektrische Daten und ein Sendemodul (5) zum Umwandeln elektrischer Daten in optische Netzwerkdaten aufweist,
mit einer ersten Datenverarbeitungseinrichtung (8, 9),
mit einer zweiten Datenverarbeitungseinrichtung (10, 11), welche mit dem Sendemodul (5) unidirektionell zum Senden elektrischer Daten an das Sendemodul (5) verbunden ist,
wobei die erste Datenverarbeitungseinrichtung (8, 9) mit der zweiten Datenverarbeitungseinrichtung (10, 11) unidirektionell zum Senden von Daten an die zweite Datenverarbeitungseinrichtung (10, 11) verbunden ist
und wobei die erste Datenverarbeitungseinrichtung (8, 9) wahlweise mit dem Empfangsmodul (4) unidirektionell zum Empfangen elektrischer Daten vom Empfangsmodul (4) oder mit dem Ausgang (19) der zweiten Datenverarbeitungseinrichtung (10, 11) verbunden ist,
mit einer Erfassungseinrichtung zum Erfassen des Netzwerkstatus und
mit einer Umschalteinrichtung (23) zum Umschalten des Eingangs (15) der ersten Datenverarbeitungseinrichtung (8, 9) zwischen dem Empfangsmodul (4) und dem Ausgang (19) der zweiten Datenverarbeitungseinrichtung (10, 11) in Abhängigkeit von dem erfassten Netzwerkstatus.

2. Netzwerkkomponente (3d) nach Anspruch 1, **dadurch gekennzeichnet, dass** die Ankopplungseinrichtung (2; 4, 5) ein optisches Steckersystem (4, 5) umfasst.

3. Netzwerkkomponente (3d) nach Anspruch 1 oder 2, **dadurch gekennzeichnet, dass** das Empfangsmodul (4) die Erfassungseinrichtung zum Erfassen des Netzwerkstatus aufweist und ein logisches elektrisches Signal (STATUS) von mindestens einem Bit entsprechend dem jeweiligen Netzwerkstatus aktiv/nicht-aktiv ausgibt.

4. Netzwerkkomponente (3d) nach Anspruch 1, 2 oder 3, **dadurch gekennzeichnet, dass** die erste Datenverarbeitungseinrichtung (8, 9) und/oder die zweite Datenverarbeitungseinrichtung (10, 11) mit der Erfassungseinrichtung (4) verbunden sind.

5. Netzwerkkomponente (3d) nach einem der vorhergehenden Ansprüche, **dadurch gekennzeichnet, dass** die erste Datenverarbeitungseinrichtung (8, 9) und/oder die zweite Datenverarbeitungseinrichtung (10, 11) einen Transceiver (8; 10) und einen damit jeweils verbundenen Prozessor (9; 11) aufweisen.

6. Netzwerkkomponente (3d) nach einem der vorhergehenden Ansprüche 3 bis 5, **gekennzeichnet durch** eine Umschalteinrichtung (23) zum Empfangen des logischen elektrischen Signals (STATUS) als Steuersignal, wobei bei einem aktiven Netzwerkstatus der Eingang der ersten Datenverarbeitungseinrichtung (8, 9) mit dem Empfangsmodul (4) **durch** die Umschalteinrichtung (23) verbunden ist und wobei bei einem nicht-aktiven Netzwerkstatus der Eingang der ersten Datenverarbeitungseinrichtung (8, 9) mit dem Ausgang (19) der zweiten Datenverarbeitungseinrichtung (10, 11) **durch** die Umschalteinrichtung (23) verbunden ist.

7. Netzwerkkomponente (3d) nach einem der vorhergehenden Ansprüche, **dadurch gekennzeichnet, dass** die zweite Datenverarbeitungsvorrichtung (10, 11) über eine Schnittstelle (12) mit einem drahtgebundenen Netzwerk verbunden ist.

8. Netzwerkkomponente (3d) nach Anspruch 7, **gekennzeichnet durch** ein Display zum Anzeigen einer darauf bezogenen Fehlermeldung, dass nach dem Senden einer eigenen Nachricht von der ersten Datenverarbeitungseinrichtung (8, 9) und/oder von der zweiten Datenverarbeitungseinrichtung (10, 11) ein logisches elektrisches Signal (STATUS) zum Anzeigen eines aktiven Netzwerkzustandes fehlt.

9. Netzwerkkomponente (3d) nach Anspruch 7, **gekennzeichnet durch** eine Schnittstelle (12) zum Ausgeben einer darauf bezogenen Fehlermeldung, dass nach dem Senden einer eigenen Nachricht von der ersten Datenverarbeitungseinrichtung (8, 9) und/oder von der zweiten Datenverarbeitungseinrichtung (10, 11) ein logisches elektrisches Signal (STATUS) zum Anzeigen eines aktiven Netzwerkzustandes fehlt.

10. Ein optisches Netzwerk (1) in Ringtopologie unter Verwendung einer Netzwerkkomponente (3d) nach einem der vorhergehenden Ansprüche.

## Claims

1. Network component (3d) for an optical network (1)
comprising a coupling device (2; 4, 5) for optically coupling the network component (3d) to the optical network (1), wherein the coupling device (2; 4, 5) has a receiving module (4) for converting optical network data into electrical data and a transmitting module (5) for converting electrical data into optical network data,
comprising a first data processing device (8, 9),
comprising a second data processing device (10, 11) which is unidirectionally connected to the transmitting module (5) for transmitting electrical data to the transmitting module (5),
wherein the first data processing device (8, 9) is unidirectionally connected to the second data processing device (10, 11) for transmitting data to the second data processing device (10, 11)
and wherein the first data processing device (8, 9) is optionally unidirectionally connected to the receiving module (4) for receiving electrical data from the receiving module (4) or to the output (19) of the second data processing device (10, 11),
comprising an acquisition device for acquiring the network status and
comprising a switch-over device (23) for switching the input (15) of the first data processing device (8, 9) between the receiving module (4) and the output (19) of the second data processing device (10, 11) in dependence on the network status acquired.

2. Network component (3d) according to Claim 1, **characterized in that** the coupling device (2; 4, 5) comprises an optical plug system (4, 5).

3. Network component (3d) according to Claim 1 or 2, **characterized in that** the receiving module (4) has the acquisition device for acquiring the network status and outputs a logical electrical signal (STATUS) of at least one bit according to the respective network status active/non-active.

4. Network component (3d) according to Claim 1, 2 or 3, **characterized in that** the first data processing device (8, 9) and/or the second data processing device (10, 11) are connected to the acquisition device (4).

5. Network component (3d) according to one of the preceding claims, **characterized in that** the first data processing device (8, 9) and/or the second data processing device (10, 11) have a transceiver (8; 10) and a processor (9; 11) connected thereto in each case.

6. Network component (3d) according to one of the preceding claims 3 to 5, **characterized by** a switch-over device (23) for receiving the logical electrical signal (STATUS) as control signal, wherein, in the case of an active network status, the input of the first data processing device (8, 9) is connected to the receiving module (4) by means of the switch-over device (23) and
wherein, in the case of a non-active network status, the input of the first data processing device (8, 9) is connected to the output (19) of the second data processing device (10, 11) by means of the switch-over device (23).

7. Network component (3d) according to one of the preceding claims, **characterized in that** the second data processing device (10, 11) is connected to a wire-connected network via an interface (12).

8. Network component (3d) according to Claim 7, **characterized by** a display for displaying an error message related to the fact that, after transmitting a message of its own from the first data processing device (8, 9) and/or from the second data processing device (10, 11), a logical electrical signal (STATUS) for displaying an active network status is lacking.

9. Network component (3d) according to Claim 7, **characterized by** an interface (12) for outputting an error message related to the fact that, after transmitting a message of its own from the first data processing device (8, 9) and/or from the second data processing device (10, 11), a logical electrical signal (STATUS) for displaying an active network status is lacking.

10. An optical network (1) in ring topology by using a network component (3d) according to one of the preceding claims.

## Revendications

1. Composants de réseau (3d) pour un réseau optique (1) comprenant une installation de couplage (2 ; 4, 5) pour le couplage optique des composants de réseau (3d) au réseau optique (1), l'installation de couplage (2 ; 4, 5) comportant un module de réception (4) pour convertir des données du réseau optique en données électriques et un module d'émission (5) pour convertir les données électriques en données de réseau optique,
une première installation de traitement de données (8, 9),
une seconde installation de traitement de données (10, 11) reliée au module d'émission (5) de manière unidirectionnelle pour émettre des données électriques vers le module d'émission (5),
la première installation de traitement de données (8, 9) étant reliée à la seconde installation de traitement de données (10, 11) de façon unidirectionnelle pour envoyer des données vers la seconde installation de traitement de données (10, 11) et
la première installation de traitement de données (8, 9) peut être reliée sélectivement au module de réception (4) de façon unidirectionnelle pour recevoir des données électriques du module de réception (4) ou à la sortie (19) de la seconde installation de traitement de données (10, 11),
une installation de saisie pour saisir l'état du réseau et
une installation de commutation (23) pour commuter l'entrée (15) de la première installation de traitement de données (8, 9) entre le module de réception (4) et la sortie (19) de la seconde installation de traitement de données (10, 11) en fonction de l'état saisi du réseau.

2. Composants de réseau (3d) selon la revendication 1,
**caractérisés en ce que**
l'installation de couplage (2 ; 4, 5) comporte un système de connexion optique (4, 5).

3. Composants de réseau (3d) selon les revendications 1 ou 2,
**caractérisés en ce que**
le module de réception (4) comporte l'installation de saisie pour saisir l'état du réseau et fournit un signal électrique logique (ETAT) d'au moins un bit correspondant à l'état respectif actif/non actif du réseau.

4. Composants de réseau (3d) selon les revendications 1, 2, 3,
**caractérisés en ce que**
la première installation de traitement de données (8, 9) et/ou la seconde installation de traitement de données (10, 11) sont reliées à l'installation de saisie (4).

5. Composants de réseau (3d) selon l'une des revendications précédentes,
**caractérisés en ce que**
la première installation de traitement de données (8, 9) et/ou la seconde installation de traitement de données (10, 11) comportent un émetteur/récepteur (8, 10) et un processeur (9, 11) relié à celui-ci.

6. Composants de réseau (3d) selon l'une des revendications précédentes 3 à 5,
**caractérisés par**
une installation de commutation (23) pour recevoir le signal électrique logique (ETAT) comme signal de commande et en cas d'état actif de réseau, l'entrée de la première installation de traitement de données (8, 9) est reliée au module de réception (4) par une installation de commutation (23) et pour un état de réseau non actif, l'entrée de la première installation de traitement de données (8, 9) est reliée à la sortie (19) de la seconde installation de traitement de données (10, 11) par l'installation de commutation (23).

7. Composants de réseau (3d) selon l'une des revendications précédentes,
**caractérisés en ce que**
le second dispositif de traitement de données (10, 11) est relié par une interface (12) à un réseau non relié par fils.

8. Composants de réseau (3d) selon la revendication 7,
**caractérisés par**
un afficheur pour afficher un message d'erreur correspondant de façon qu'après l'émission d'un premier message par la première installation de traitement de données (8, 9) et/ou la seconde installation de traitement de données (10, 11), indiquant qu'il manque un signal électrique logique (ETAT) pour afficher un état actif de réseau.

9. Composants de réseau (3d) selon la revendication 7,
**caractérisés par**
une interface (12) pour émettre un message d'erreur concernée indiquant qu'après l'émission de son propre message par la première installation de traitement de données (8, 9) et/ou la seconde installation de traitement de données (10, 11), il manque un signal électrique logique (ETAT) pour afficher un état actif de réseau.

10. Réseau optique (1) en topologie annulaire utilisant un composant de réseau (3d) selon l'une des revendications précédentes.
